# EUROPÄISCHE PATENTANMELDUNG

(11) **EP 1 199 215 A1**
(43) Veröffentlichungstag der Anmeldung: **24.04.2002**
(21) Anmeldenummer: 01124027.2
(22) Anmeldetag: 09.10.2001
(51) Int. Cl.: B60N 2/427

(54) **Vorrichtung zum Führen eines Sitzes eines Fahrzeuges**

(30) Priorität: 18.10.2000 DE 10051669
(71) Anmelder: DaimlerChrysler AG, 70567 Stuttgart (DE)
(72) Erfinder: Feichtinger, Achim, 71032 Böblingen (DE); Klink, Josef, 72202 Nagold (DE); Schlaffke, Hans-Jürgen, 88348 Saulgau (DE)

(57) **Zusammenfassung**

Es wird eine Vorrichtung zum Führen eines Sitzes eines Fahrzeuges, insbesondere eines Kraftfahrzeuges, vorgeschlagen, welche eine Laufschienenanordnung aus wenigstens einer an dem Sitz angeordneter Führungsschiene (2) und zumindest einer an dem Fahrzeug befestigten Gleitschiene (10) aufweist. Darüber hinaus ist wenigstens ein den Sitz des Fahrzeuges in einer gewünschten Position der Gleitschiene arretierendes Arretierungselement (4) vorgesehen, welches wenigstens ein im Crash-Fall Energie absorbierendes Deformationselement (3,3') aufweist.

## Beschreibung

Die Erfindung betrifft eine Vorrichtung zum Führen eines Sitzes eines Fahrzeuges, insbesondere eines Kraftfahrzeuges, mit einer Laufschienenanordnung aus wenigstens einer an dem Sitz angeordneten Führungsschiene und zumindest einer an dem Fahrzeug befestigten Gleitschiene sowie ein im Crash-Fall Energie absorbierendes Deformationselement.

Bei herkömmlichen Fahrzeugen sind insbesondere die Vordersitze bewegbar angeordnet, so daß eine optimale Sitzposition in Abhängigkeit der Größe eines jeweiligen Insassen des Fahrzeuges einstellbar ist. Dazu wird üblicherweise der Sitz mittels einer Laufschienenanordnung im Fahrzeug bewegbar angeordnet. Somit kann der Insasse z.B. mittels eines Verstellhebels den Sitz des Fahrzeuges in eine gewünschte Position bringen.

Im Fall einer Kollision wirken auf den Insassen Trägheitskräfte, die je nach Schwere der Kollision erheblich sein können. Diese Kräfte werden von dem in eine Lehne des Sitzes des Fahrzeuges gepreßten Insassen auf die bekannte Vorrichtung zum Führen des Sitzes übertragen. Insbesondere die Laufschienenanordnung der bekannten Vorrichtung, mit der der Sitz des Fahrzeuges bewegbar an einem Boden des Fahrzeuges befestigt ist, wird dabei mechanisch erheblich beansprucht.

Um zumindest einen Teil der auf den Insassen des Fahrzeuges wirkenden Kraft bzw. Energie abzubauen, werden Deformationselemente bei einer aus der Praxis bekannten Vorrichtung zum Führen des Sitzes vorgesehen, so daß diese Deformationselemente die auftretende Energie absorbieren können, wodurch die auf den Insassen wirkende Energie reduziert wird.

Eine derartige Vorrichtung zum Führen des Sitzes des Fahrzeuges ist auch aus der DE 196 13 506 C2 bekannt. Die bekannte Vorrichtung besteht aus der als Sitzschienenpaar ausgebildeten Laufschienenanordnung. Die bekannte Laufschienenanordnung weist zumindest eine als Unterschiene ausgebildete Gleitschiene und zumindest eine als Oberschiene ausgebildete Führungsschiene auf. Die Unterschiene ist mit dem Boden des Fahrzeuges verbunden. Die Oberschiene ist in der Unterschiene längsverschiebbar geführt und mit dem Sitz des Fahrzeuges verbunden. Zwischen der Unterschiene und der Oberschiene können beispielsweise Wälzkörper oder Gleitkörper vorgesehen sein, die eine reibungsarme Verschiebbarkeit des Sitzes des Fahrzeuges ermöglichen.

Des weiteren ist ein an der Unterschiene befestigter Schlitten vorgesehen. Der Sitz des Fahrzeuges ist mit der Oberschiene in der Unterschiene derart bewegbar angeordnet, daß der Sitz in einer gewünschten Position mittels einem als Verriegelungseinrichtung ausgebildeten Arretierungselement an dem Schlitten bzw. an der Unterschiene arretierbar ist. Die Verriegelungseinrichtung weist dazu an der Oberschiene und an dem Schlitten angeordnete Rastelemente auf. Der Schlitten ist mit der Unterschiene über eine Sollbruchstelle miteinander befestigt. Im Fall einer Kollision soll dann diese Sollbruchstelle brechen, so daß der Schlitten mit dem Sitz des Fahrzeuges relativ zur Unterschiene bewegbar ist.

Zudem ist an dem Schlitten wenigstens ein als Energieabsorberelement ausgebildetes Deformationselement vorgesehen. Das Deformationselement weist z.B. Stege auf, in die ein an der Unterschiene angeordneter Keilkörper im Fall einer Kollision eingreifen kann, wobei die Stege durch den Keilkörper im Kollisionsfall unter Energieabsorption bis zur Zerstörung deformiert werden.

Bei sämtlichen Ausgestaltungen der bekannten Vorrichtung besteht jedoch der Nachteil, daß nach einer Kollision sowohl die als Unterschiene ausgebildete Gleitschiene als auch der Schlitten ausgewechselt werden müssen, da einerseits der mit dem Deformationselement ausgerüstete Schlitten und andererseits die z.B. das Keilelement aufweisende Unterschiene erheblich verformt bzw. zerstört werden. Darüber hinaus wird bei der bekannten Vorrichtung eine Energieabsorption der Deformationselemente lediglich in eine Richtung bewirkt, so daß eine Entlastung des Insassen des Fahrzeuges entweder nur bei einer Heckkollision oder nur bei einer Frontkollision ermöglicht wird.

Des weiteren ist bei der bekannten Vorrichtung der Bauaufwand erheblich, da die Laufschienenanordnung neben der Führungsschiene und der Gleitschiene sowie dem als Rastelement ausgebildeten Arretierungselement zusätzlich einen Schlitten aufweist.

Aus der DE 39 06 659 C2 ist eine Sitzführung für einen Fahrzeugsitz bekannt, bei der ein Deformationselement zum Energieabbau an einer Gleitschiene und an einer Antriebseinrichtung und einer Zahnstange angeordnet ist. Die Energieabsorption im Crash-Fall wird jedoch bei dieser bekannten Lösung ebenfalls durch eine komplexe und aufwendige Mechanik gelöst.

Der Erfindung liegt die Aufgabe zugrunde, eine Vorrichtung zum Führen eines Sitzes eines Fahrzeuges zu schaffen, welche bezüglich der Sicherheit des Insassen des Fahrzeuges und des Montageaufwandes, insbesondere nach einer Kollision, weiter verbessert ist.

Erfindungsgemäß wird diese Aufgabe durch eine Vorrichtung zum Führen eines Sitzes eines Fahrzeuges gemäß den Merkmalen des Patentanspruches 1 gelöst.

Die erfindungsgemäße Vorrichtung bietet den Vorteil, daß bei einer Kollision lediglich das Deformationselement verformt wird. Weitere Bauteile der Laufschienenanordnung werden im Kollisionsfall nicht verformt bzw. zerstört. Somit muß nach einem Verunfallen des Fahrzeugs lediglich das Deformationselement der erfindungsgemäßen Vorrichtung ausgetauscht werden.

Des weiteren kann mit der erfindungsgemäßen Vorrichtung sowohl die bei einem Heckaufprall als auch bei einem Frontalaufprall des Fahrzeuges auf den Insassen bzw. auf die Vorrichtung wirkende Energie absorbiert werden. Dies wird insbesondere dadurch erreicht, daß das Deformationselement in beide Richtungen verschiebbar ist und somit ein Energieabbau bei jedem Kollisionsfall erreicht werden kann.

Weiterhin ist bei der erfindungsgemäßen Vorrichtung von Vorteil, daß ein Arretierungselement der Laufschienenanordnung über das Deformationselement mit der Gleitschiene gekoppelt ist. Somit ist kein zusätzlicher Schlitten erforderlich. Dadurch wird der Montage- bzw. Bauaufwand bei der erfindungsgemäßen Vorrichtung minimiert.

Eine vorteilhafte Weiterbildung der Erfindung sieht vor, daß das Deformationselement in einer Ausnehmung an der Führungsschiene verschiebbar ist. Da die Ausnehmung in Verschieberichtung des Deformationselements verjüngt ausgebildet ist, kann im Fall einer Kollision Energie insbesondere dadurch absorbiert werden, daß sich das Deformationselement in der sich verjüngenden Ausnehmung verformt bzw. die Reibung zwischen dem Deformationselement und der Führungsschiene beim Verschieben erhöht wird.

Es ist denkbar, daß die Ausnehmung beispielsweise im wesentlichen langlochförmig oder dergleichen ausgebildet ist. In der Ausnehmung kann dann ein plattenförmig oder dergleichen geformtes Deformationselement mit z.B. bolzenförmigen Führungselementen in der Ausnehmung verschiebbar sein. Selbstverständlich sind auch andere konstruktive Ausgestaltungen der Führungselemente möglich.

Des weiteren ist es möglich, daß das Deformationselement einen Energie absorbierenden Deformationsabschnitt aufweist. Vorteilhaft ist es, wenn zwei Deformationselemente mit jeweils einem Deformationsabschnitt vorgesehen sind. Beispielsweise können dann die Deformationselemente derart angeordnet sein, daß beim Bewegen des Deformationselements sowohl in eine als auch in die andere Verschieberichtung eine entsprechende Verformung des Deformationselements gewährleistet ist. Somit kann das Deformationselement sowohl bei einer Heckkollision als auch bei einer Frontalkollision des Kraftfahrzeuges Energie absorbieren.

Besonders vorteilhaft ist es, wenn das Deformationselement als gebogenes Blech vorgesehen ist, wobei dann der Deformationsabschnitt z.B. wellenförmig gebogen ist. Damit wird eine sehr große Energieabsorption ermöglicht. Es ist auch möglich, daß das Deformationselement als gebogenes Blech in Form einer Feder ausgestaltet ist.

Alternativ kann der Deformationsabschnitt auch als eine Wabenstruktur oder dergleichen Struktur ausgebildet sein. Es ist auch denkbar, daß das Deformationselement aus einem metallischen Werkstoff gefertigt wird, insbesondere wenn der Deformationsabschnitt wellenförmig ausgebildet ist. Sollte der Deformationsabschnitt eine Wabenstruktur aufweisen, ist es auch möglich, daß zusätzlich ein aus Kunststoff gefertigtes Material als Füllung der Wabenstruktur dienen kann.

Selbstverständlich kann das Deformationselement auch vollständig aus einem Energie absorbierenden Werkstoff, wie z.B Metall, Kunststoff oder dergleichen Werkstoff, herstellt werden.

Unabhängig von der jeweiligen Ausgestaltung des Deformationselements ergibt sich darüber hinaus der Vorteil, daß die Verschiebbarkeit bzw. der Verschiebeweg des Sitzes des Fahrzeuges bei einer Kollision durch die Länge der Ausnehmung begrenzt werden kann.

Weitere Vorteile und vorteilhafte Ausgestaltungen der Erfindung ergeben sich aus den Patentansprüchen und den nachfolgend anhand der Zeichnung prinzipmäßig beschriebenen Ausführungsbeispielen.

Es zeigt:
- Fig. 1: eine schematische dreidimensionale Teilansicht eines Sitzes eines Kraftfahrzeuges mit einer erfindungsgemäßen Vorrichtung zum Führen des Sitzes;
- Fig. 2: eine schematische dreidimensionale Teilansicht der erfindungsgemäßen Vorrichtung mit in einer Ausnehmung angeordnetem Deformationselement; und
- Fig. 3: eine schematische dreidimensionale Teilansicht gemäß Fig. 2 mit einem wellenförmig ausgebildeten Deformationselement.

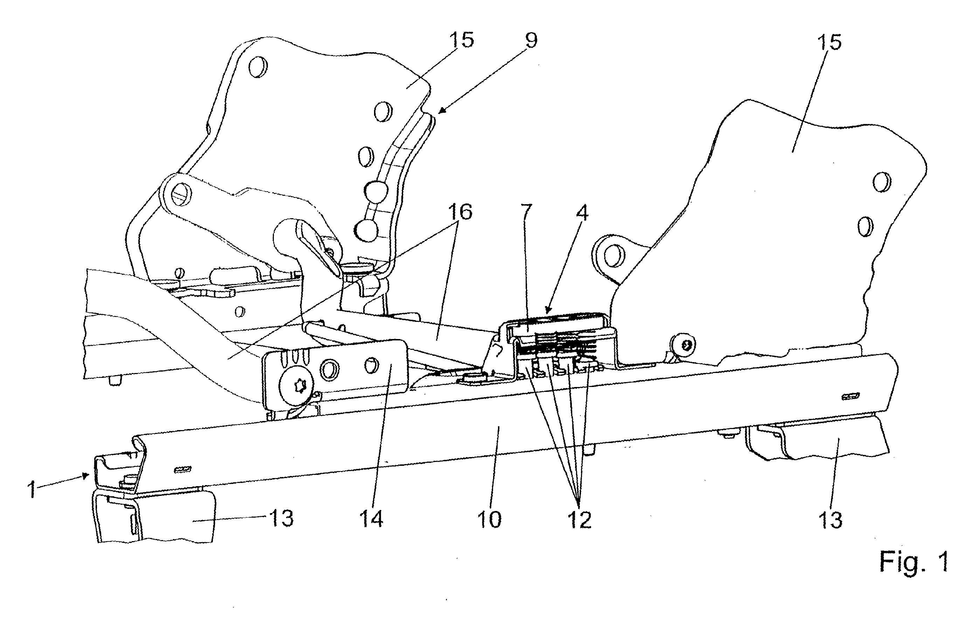

In Fig. 1 ist ein Sitz 9 eines als Kraftfahrzeug ausgebildeten Fahrzeuges teilweise dargestellt. Der Sitz 9 weist Seitenteile 15 auf, an denen eine Sitzlehne und ein Sitzkissen befestigbar sind. Die Seitenteile 15 sind miteinander über Querverstrebungen 16 verbunden, wobei die Seitenteile 15 parallel zueinander angeordnet sind.

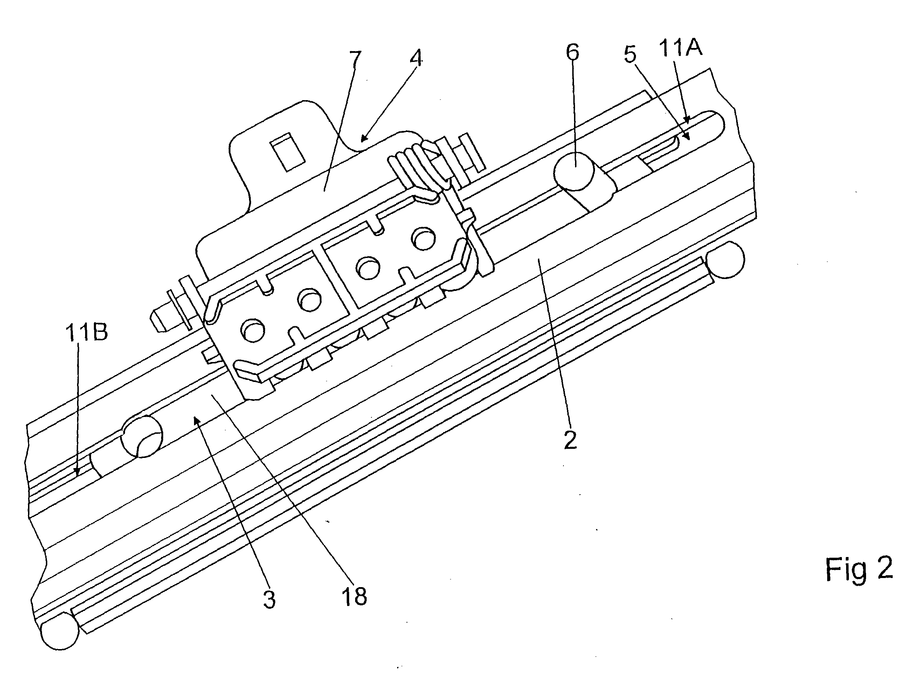

Der Sitz 9 ist mit einer erfindungsgemäßen Vorrichtung zum Führen des Sitzes 9 derart verbunden, daß der Sitz längenverstellbar in dem Fahrzeug angeordnet ist. Dazu weist die Vorrichtung eine Laufschienenanordnung 1 auf. Die Laufschienenanordnung 1 umfaßt eine in Fig. 2 näher dargestellte Führungsschiene 2 und eine Gleitschiene 10 sowie ein Arretierungselement 4.

Die Gleitschiene 10 ist fahrzeugfest z.B. mit einem Boden des Fahrzeuges verbunden. Üblicherweise sind dafür Fußelemente 13 vorgesehen, welche die Gleitschiene 9 mit dem Boden des Kraftfahrzeuges verbinden. Die Fußelemente 13 sind in Figur 1 lediglich angedeutet.

Der Sitz 9 ist mit seinen Seitenteilen 15 und seinen Querverstrebungen 16 über zumindest ein flanschförmig ausgebildetes Verbindungsteil 14 mit dem Arretierungselement 4 verbunden. Das Arretierungselement 4 ist wiederum über ein in Fig. 2 näher dargestelltes Deformationselement 3 mit der Führungsschiene 2 der Laufschienenanordnung 1 verbunden.

Mit der Führungsschiene 2 ist der Sitz 9 entlang der Gleitschiene längenverstellbar im Kraftfahrzeug angeordnet, wobei ein Insasse den Sitz 9 in einer gewünschten Postion mit dem Arretierungselement 4 an der Gleitschiene 10 arretieren kann.

Bei dem Arretierungselement 4 handelt es sich um ein federbelastetes Klemmorgan 7, welches den Sitz 9 des Kraftfahrzeuges mit der Führungsschiene 2 an der Gleitschiene 10 in einer Arretierunsstellung verklemmt. Das Klemmorgan 7 weist hierzu mehrere Rastelemente 12 auf, wobei in der Arretierungsstellung wenigstens ein Rastelement 12 in ein an der Gleitschiene 10 angeordnetes Rastblech einrastet. Somit ist eine stufenlose Verstellung des Sitzes 9 möglich. Selbstverständlich sind auch andere dem Fachmann an sich bekannte Arretierungselemente 4 bei der erfindungsgemäßen Vorrichtung zum Führen des Sitzes des Fahrzeuges einsetzbar.

In vorteilhafter Weise ist das Arretierungselement 4 hier mittels dem Deformationselement 3 mit der Führungsschiene 2 derart verbunden, daß der Sitz 9 im Fall einer Kollision relativ zu der Führungsschiene 2 bewegbar ist. Dabei kann das Deformationselement 3 die bei einer Kollision auf den Insassen bzw. auf die erfindungsgemäße Vorrichtung wirkende Energie durch entsprechende Verformung absorbieren.

Eine erste Ausgestaltung des Deformationselements 3 ist in Fig. 2 dargestellt. Das Deformationselement 3 ist bei dieser Ausgestaltung mit einer Platte 18 ausgebildet, die in einer an der Führungsschiene 2 vorgesehenen Ausnehmung 5 insbesondere im Crash-Fall verschiebbar angeordnet ist.

Das mit der Platte 18 ausgebildete Deformationselement 3 weist ein bolzenförmiges Führungselement 6 auf, mit dem das Deformationselement 3 in der Ausnehmung 5 der Führungsschiene 2 verschiebbar angeordnet ist. Die Ausnehmung 5 ist z.B. im wesentlichen langlochförmig ausgebildet, wobei die Endbereiche 11A, 11B verjüngt ausgebildet sind, daß ihre Breite kleiner ist als der Durchmesser des Führungselements 6. Dabei kann es auch vorgesehen sein, daß sich die Endbereiche 11A, 11B V-förmig zunehmend verjüngen.

Im Crash-Fall wird ein Energieabbau durch das Verschieben der bolzenförmigen Führungselemente 6 des hier aktiv wirkenden Deformationselements 3 entlang der verjüngt ausgebildeten Endbereiche 11A, 11B der Ausnehmung 5 ermöglicht, indem diese vorliegend von dem Führungselement 6 unter Entfaltung einer Dämpfungswirkung aufgebogen werden, bis der Führungsbolzen einen Endanschlag in der Ausnehmung 5 erreicht. Selbstverständlich ist es in einer Ausführungsalternative aber auch möglich, daß das Führungselement 6 als passives Deformationselement vorgesehen ist, welches entlang der Endbereiche 11A, 11B der Ausnehmung 5 verformt wird, oder daß sowohl das Führungselement 6 als auch die Ränder der Endbereiche der Ausnehmung 5 eine Deformation erfahren. In letzterem Fall wäre eine Kombination von aktiven und passiven Deformationselementen gegeben.

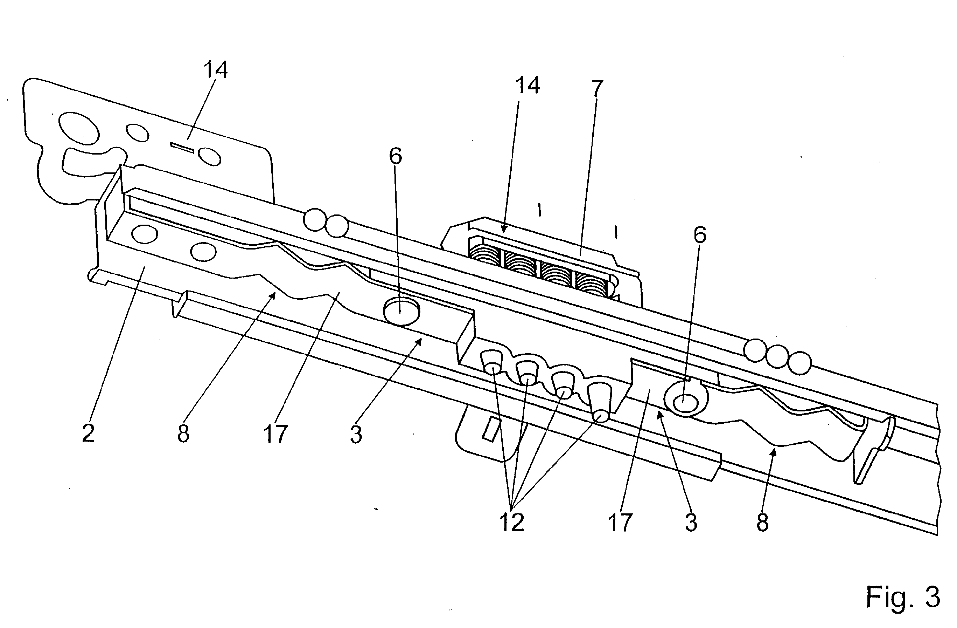

In Fig. 3 ist die erfindungsgemäße Vorrichtung mit einem alternativ ausgestalteten Deformationselement 3' dargestellt. Auch hier wird die erfindungsgemäße Vorrichtung lediglich teilweise mit der Laufschienenanordnung 1 gezeigt, wobei für gleiche Bauteile wie in der zuvor beschriebenen Ausführung die gleichen Bezugszeichen verwendet werden.

Bei dieser konstruktiven Ausgestaltung ist das Arretierungselement 4 ebenfalls mittels einem Deformationselement 3' derart mit der Führungsschiene 2 gekoppelt, daß der Sitz 9 im Fall einer Kollision entlang der Führungsschiene 2 verschiebbar ist. Dazu kann vorzugsweise auch hier eine Ausnehmung 5 an der Führungsschiene 2 vorgesehen werden, so daß der Verschiebeweg des Deformationselements 3' begrenzt ist. Das Deformationselement 3' kann bei einer Kollision Energie absorbieren, indem das Deformationselement 3' an vorbestimmten Abschnitten verformt bzw. deformiert wird.

Das Deformationselement 3' ist bei dieser Ausgestaltung z.B. mit zwei Blechstreifen 17 vorgesehen, die jeweils einerseits mit dem Klemmorgan 7 und andererseits mit der Führungsschiene 2 verbunden sind. Die Blechstreifen 17 weisen z.B. jeweils einen Deformationsabschnitt 8 auf.

Die Deformationsabschnitte 8 sind bei der Ausführung nach Fig. 3 im wesentlichen wellenförmig ausgebildet. Im Fall einer Kollision können sich die wellenförmig ausgebildeten Deformationsabschnitte 8 der Blechstreifen 7 entsprechend verformen, so daß bei einer Relativbewegung des Sitzes 9 zur Führungsschiene 2, beispielsweise bei einer Kollision des Kraftfahrzeuges, möglichst viel Energie absorbiert wird, und somit die Belastung des Insassen minimiert wird.

## Patentansprüche

1. Vorrichtung zum Führen eines Sitzes (9) eines Fahrzeuges, insbesondere eines Kraftfahrzeuges, mit einer Laufschienenanordnung (1) aus wenigstens einer an dem Sitz (9) angeordneten Führungsschiene (2) und zumindest einer an dem Fahrzeug befestigten Gleitschiene (10) sowie wenigstens einem den Sitz (9) in einer gewünschten Position an der Gleitschiene (10) arretierenden Arretierungselement (4), welches wenigstens ein im Crash-Fall Energie absorbierendes Deformationselement (3, 3') aufweist.

2. Vorrichtung nach Anspruch 1,
**dadurch gekennzeichnet,**
**daß** das Deformationselement (3, 3') das Arretierungselement (4) derart mit der Führungsschiene (2) koppelt, daß der Sitz (9) im Fall einer Kollision entlang der Führungsschiene (2) bewegbar ist.

3. Vorrichtung nach Anspruch 2,
**dadurch gekennzeichnet,**
**daß** das Deformationselement (3, 3') in einer an der Führungsschiene (2) vorgesehenen Ausnehmung (5) im Fall einer Kollision verschiebbar ist.

4. Vorrichtung nach Anspruch 3,
**dadurch gekennzeichnet,**
**daß** zumindest Endbereiche (11A, 11B) der Ausnehmung (5) abschnittsweise derart verjüngt ausgebildet sind, daß im Fall einer Kollision in Verschieberichtung des Deformationselements (3) Energie absorbierbar ist.

5. Vorrichtung nach einem der Ansprüche 3 oder 4,
**dadurch gekennzeichnet,**
**daß** das Deformationselement (3) mit einer Platte (18) ausgebildet ist, welche mit wenigstens einem bolzenförmigen Führungselement (6) in der Ausnehmung (5) der Führungsschiene (2) verschiebbar angeordnet ist.

6. Vorrichtung nach einem der Ansprüche 1 bis 5,
**dadurch gekennzeichnet,**
**daß** das Deformationselement (3') mit wenigstens einem Blechstreifen (17) ausgebildet ist, welcher wenigstens einen Deformationsabschnitt (8) aufweist.

7. Vorrichtung nach Anspruch 6,
**dadurch gekennzeichnet,**
**daß** der Deformationsabschnitt (8) im wesentlichen wellenförmig ausgebildet ist.

8. Vorrichtung nach einem der Ansprüche 6 oder 7,
**dadurch gekennzeichnet,**
**daß** der Deformationsabschnitt (8) eine Wabenstruktur aufweist.

9. Vorrichtung nach einem der Ansprüche 3 bis 8,
**dadurch gekennzeichnet,**
**daß** ein Verschiebeweg des Deformationselements (3, 3') im Fall einer Kollision entlang der Führungsschiene (2) durch die Ausnehmung (5) begrenzt ist.

10. Vorrichtung nach einem der Ansprüche 1 bis 9,
**dadurch gekennzeichnet,**
**daß** das Arretierungselement (4) ein federbelastetes Klemmorgan (7) aufweist, welches in seiner Arretierungsstellung den Sitz (9) mit der Führungsschiene (2) an der Gleitschiene (10) verklemmt.
